# EUROPEAN PATENT SPECIFICATION

(11) **EP 1 173 447 B1**
(45) Date of publication and mention of the grant of the patent: **02.07.2003**
(21) Application number: 00923383.4
(22) Date of filing: 14.04.2000
(51) Int. Cl.: C07F 7/16

(54) **PROMOTING DIALKYLDIHALOSILANES FORMATION DURING DIRECT PROCESS PRODUCTION**
FÖRDERUNG DER BILDUNG VON DIALKYLDIHALOSILANEN IN DER DIREKTSYNTHESE
AMELIORATION DE LA FORMATION DE DIALKYLDIHALOSILANES PENDANT LA PRODUCTION DE TRANSFORMATION DIRECTE

(30) Priority: 19.04.1999 US 293798
(43) Date of publication of application: 23.01.2002
(73) Proprietor: GENERAL ELECTRIC COMPANY, Schenectady, NY 12345 (US)
(72) Inventor: WARD, William, Jessup, III, Schenectady, NY 12309 (US); LEWIS, Larry, Neil, Scotia, NY 12302 (US); BABLIN, John, Matthew, Amsterdam, NY 12010 (US); DEMOULPIED, David, Cheney, Clifton Park, NY 12065 (US)
(74) Representative: Szary, Anne Catherine, Dr.
(86) International application number: US0010145
(87) International publication number: WO00063217

(56) References cited:
- US-A- 4 602 101
- US-A- 5 059 706
- US-A- 6 005 130

## Description

### BACKGROUND OF THE INVENTION

The present invention is directed to a method for enhancing the formation and recovery of dialkyldihalosilane from alkylhalosilane crude formed during direct method contact between an alkylhalide and silicon powder in the presence of a copper catalyst. More particularly, the present invention relates to a direct method for methylchlorosilane manufacture by maintaining a low weight ratio of zinc with respect to copper while using phosphorus as a promoter for enhancing dimethyldichlorosilane formation.

The Rochow Direct Method Process for making methylchlorosilanes by effecting reaction between powdered silicon and methyl chloride in the presence of a copper catalyst is shown by U.S. Pat. 2,380,995. As taught by Rochow in Chemistry of the Silicones, Second Edition, (1951), John Wiley and Sons, New York, pg. 79-80, dimethyldichlorosilane is the source of dimethylsiloxy, or "D" units when hydrolyzed, and is basic for the manufacture of high molecular weight polymers. It has been long recognized, as shown by Rochow et al., *J*. *Am. Chem. Soc*., 63 798 (1941) that in addition to copper, key metallic promoters, such as zinc and tin, also can enhance the formation of dimethyldichlorosilane during direct method methylchlorosilane crude production.

T. Margaria et al., WO/95/01303, (1994) have further described the use of phosphorus as a promoter for dimethyldichlorosilane formation in the direct method. Copper phosphide has been cited by Halm et al., in U.S. patent 4,762,940 (1990), as useful source of phosphorus for improving dimethyldichlorosilane selectivity in direct method procedures. As shown in U.S. patent 5,059,343, Halm et al., also investigated the effects of using phosphorus to improve dimethyldichlorosilane selectivity in direct method operations in combination with copper, tin and zinc. US-A-4602101 discloses a method for controlling the process for the manufacture of alkylhalosilanes comprising contacting an alkyl halide with metallurgical grade silicon at 250-350°C in the presence of tin or tin compounds and copper or copper compounds and from 25 to 2500 ppm based on the silicon of a phosphorus promoter. Even though significant advances have been made with respect to procedures for improving the yields of dimethyldichlorosilane in direct method methylchlorosilane manufacture, further techniques are constantly being sought.

### BRIEF SUMMARY OF THE INVENTION

The present invention is based on the discovery that while phosphorus is recognized as a dimethyldichlorosilane promoter, its effectiveness for dimethyldichlorosilane formation during direct method operation can be substantially enhanced by introducing phosphorus into the reactor, while maintaining a high weight ratio of copper to zinc. Support for such conclusions involving phosphorus usage, is shown in a direct method study operating over a Cu/Zn ratio range of 25 to 100.

### SUMMARY OF THE INVENTION

A method for promoting the formation of dialkyldihalosilane during direct method alkylhalosilane production, comprises effecting reaction between alkylhalide and powdered silicon in the presence of a catalyst comprising copper, silicon, zinc, and phosphorus, where there is maintained during alkylhalosilane formation, a reaction mixture comprising by weight, an average of from 1% to 5% of copper based on the weight of silicon, a sufficient amount of zinc to provide a Cu/Zn weight ratio having a value of from 25 to 100, and a proportion of from 100 ppm to 1000 ppm of phosphorus, based on the weight of reaction mixture.

### DETAILED DESCRIPTION OF THE INVENTION

Among the reactors which can be used in the practice of the invention, there are included a fixed bed, a stirred bed and a fluid bed. The invention can be practiced in a continuous, or semi-continuous manner. Although methyl chloride is the alkyl halide of choice, other alkyl halides such as C₁₋₄ alkyl chlorides, for example, ethyl chloride, propyl chloride, etc., also can be used.

In instances where a fluid bed reactor is used, methyl chloride, an inert gas such as argon, or mixture thereof can be used to fluidize the bed of silicon particles. The silicon particles can have an average size of below 700 microns, with an average size of greater than 20 microns and less than 300 microns. Preferably, the mean diameter is in the range of 100 to 150 microns.

Among the copper compounds which can be used as copper sources in the practice of the invention are carboxylic salts of copper, and partially oxidized copper. Additional copper sources are particulated cupric chloride and cuprous chloride, copper flake, brass and bronze.

Zinc metal powder, halides of zinc, such as zinc chloride, zinc oxide, have been found effective as sources of zinc. Relative to copper and tin weight ratios, tin can be present in the reaction mixture during dialkyldihalosilane formation, at from 200-3000 ppm of tin, per part of copper. Sources of tin include, tin metal dust, tin halides, tin oxide, tetramethyl tin, alkyl tin halides, brass and bronze.

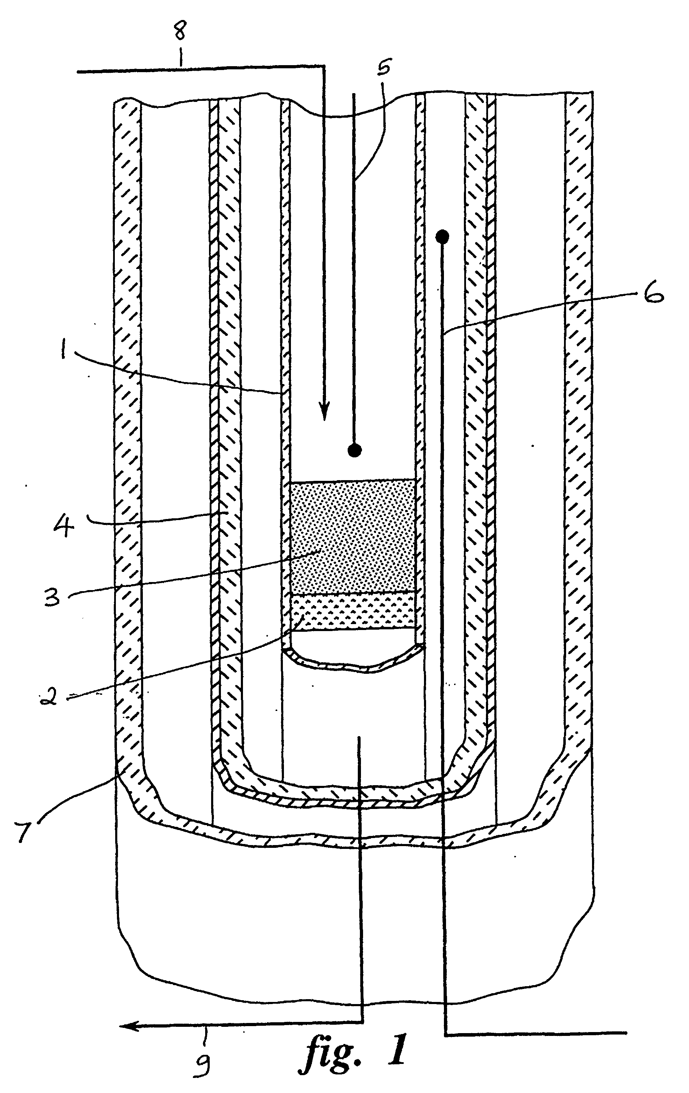

Figure 1 shows a cylindrical, heat resistant glass fixed bed reactor at 1, having a porous glass frit at 2 and a charge of silicon powder at 3. The fixed bed reactor is enclosed in a tin oxide-coated glass heating tube at 4 having electrical terminals not shown. A series of thermocouples inserted in stainless steel tubing are shown at 5 and 6 which respectively monitor temperatures of the powdered silicon mass and the preheat zone. An outer glass insulation and safety tube is shown at 7. A methyl chloride inlet is shown at 8 and an outlet for silane vapor and unreacted methyl chloride is shown at 9.

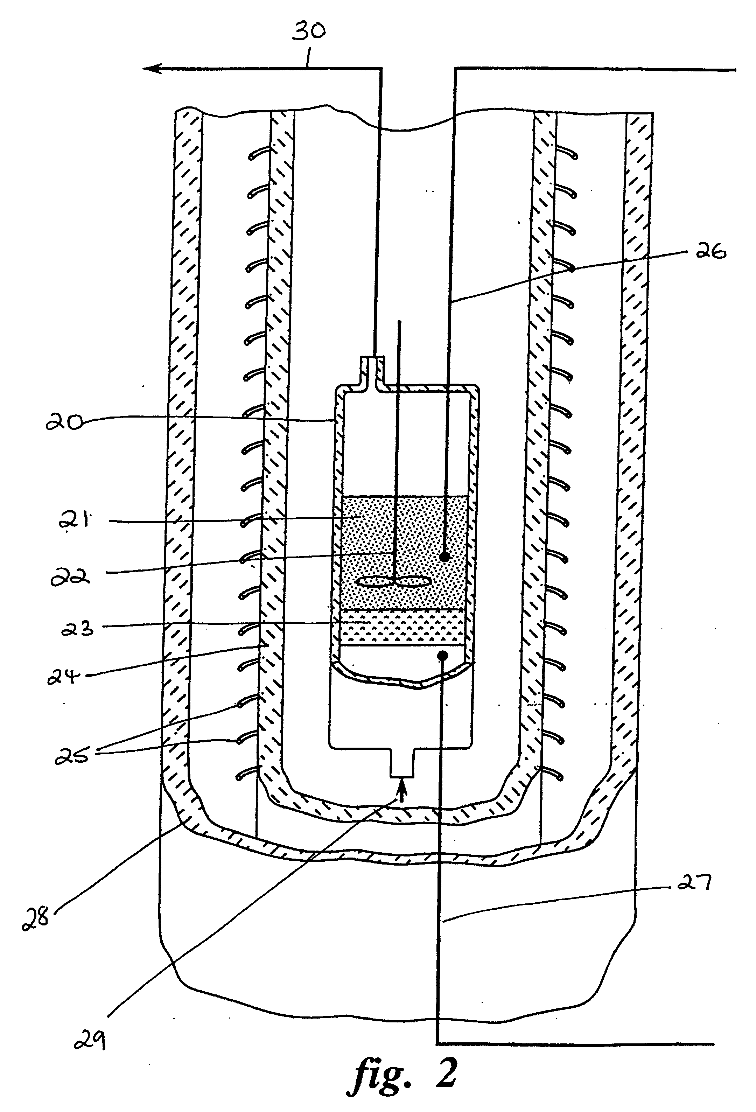

Figure 2 shows a cylindrical, heat resistant glass fluidized bed reactor at 20, having a fluidized bed of silicon at 21 and a stirrer at 22. A porous frit for containing silicon powder, which allows methyl chloride flow into the reactor, is shown at 23. The reactor is enclosed in a glass heating tube at 24, which is wrapped in Nichrome wire at 25. Thermocouples inserted in stainless steel tubing are shown at 26 and 27 to monitor the temperature of the bed and the reactor. An outer glass safety tube is shown at 28. A methyl chloride inlet port is shown at 29 and a silane vapor and unreacted methyl chloride exit port is shown at 30. A vibrator, not shown, can be used in particular situations to stabilize the fluidized bed.

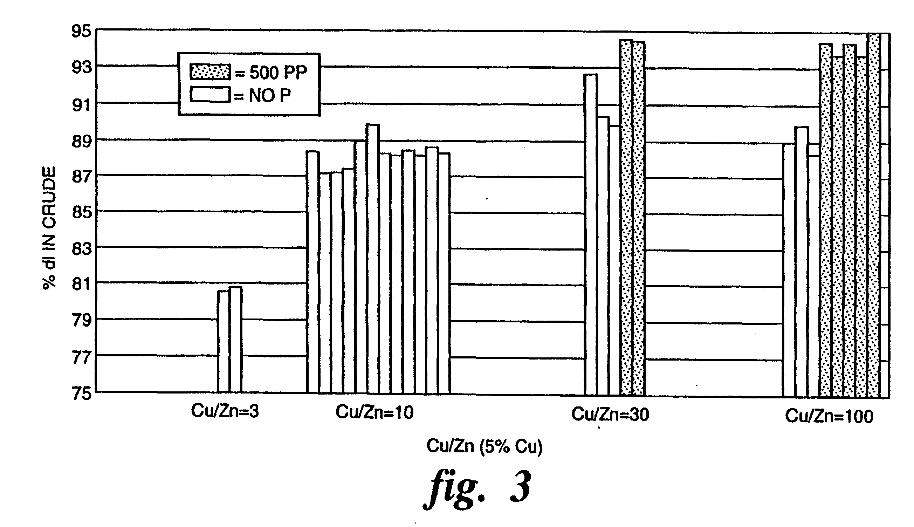

The graph at Figure 3 shows the dramatic impact phosphorus can have, at a 500 ppm level, on promoting dimethydichlorosilane formation during direct method methylchlorosilane production. The data is based on operating a fixed bed, such as shown in Figure 1, at 20% silicon utilization, over a broad Cu/Zn weight ratio range, employing copper phosphide as a phosphorus source. As shown by the graph, Cu/Zn ratio values of about 30 to about 100 are particularly significant.

In order that those skilled in the art will be better able to practice the present invention, the following description is given by way of illustration, and not by way of limitation. All parts are by weight unless otherwise indicated.

### EXAMPLE 1.

A fixed bed reactor, as shown by Figure 1, is used in a dimethyldichlorosilane promotion study. The fixed bed reactor is a glass tube 20 cm long having a 1.3 cm outside diameter. A glass frit is located 6 cm from the end to support a bed of powdered silicon. The bed size is 6 grams. The highest anticipated reaction rate is 1 gram crude/hr-gm silicon.

Analysis is conducted to determine crude composition. Silicon utilization is determined by weighing crude samples at various times. Typically data is recorded at 20% by weight silicon utilization. Selectivity is determined by gas chromatography, "GC", with thermal conductivity detectors. Individual silane component analysis is performed by analysis of reagent grade silanes obtained from Aldrich Co. GC calibrations are performed by analysis of silane mixtures of known composition.

Silicon powder used in the study, is furnished by Elkem Co. of Alloy, West Virginia. The silicon powder is ground to achieve an average surface area of 0.38 meters²/gm. The major elemental components in ppm present in the silicon are Al(1800), Ca(20), Fe(5000), P(40). Several of the catalyst sources, such as cuprous chloride, powdered tin, and powdered zinc used in the study are obtained from the Aldrich Co. of Milwaukee, Wisconsin.

Among the sources of phosphorus used, there are included,(Cu)₃P from Green Back Industries of Greenback, Tennessee, Zn₃P₂, PCl₃, P(CH₃)₃, and P(C₂H₅)₃ from the Aldrich Co.

A preferred copper source used in the study, is cuprous chloride which is preferably pre-reacted at 350°C with silicon powder to form a contact mass as shown by the following equation:

Si + CuCI --> Contact Mass (Cu₃Si) + 1/4 SiCl₄

The contact mass is added to the reactor with other catalyst components. The contact mass is prepared as follows:

A mixture of 40 g of silicon powder (0.38 micron particle size), and 5.43 g of hexane is combined with a hexane slurry of 12.67 g of solids consisting of CuCI and tin dust having a Cu/Sn ratio of 1000/1. The mixture is initially dried with a stream of nitrogen under ambient conditions, and then fully dried under reduced pressure at ambient temperatures.

The pre-contact mass is placed in a crucible and then into a furnace and heated to 300°C under a flow of argon until SiCl₄ evolution ceases. An NH₄OH indicator is used to monitor the effluent. The weight change due to loss of volatile products accompanying the reaction to prepare contact mass is within experimental error equal to the calculated weight loss.

The fixed bed reaction is run over a period of 8 hrs. at a temperature of 300°C to 310°C. There is used a contact mass based on an initial charge of 6 g of powdered silicon, and 5% by weight copper of the contact mass in the form of CuCl. Sufficient powdered tin and powdered zinc are also blended into the contact mass to provide a Sn/Cu ratio having a value of about 1000 ppm, and a Cu/Zn ratio having a value of 10/1. A methyl chloride flow rate is maintained at 35 mL /min. After about 20% silicon utilization, based on weight of crude formed, the selectivity for dimethyldichlorosilane is found by gas chromatography to be 86.6%.

Following substantially the same procedure, a series of fixed bed reaction runs are made involving the use of contact mass carried to at least 20% silicon utilization, with and without phosphorus at initial Cu/Zn ratios at 10/1 and 100/1.

Prior to charging the reactor, appropriate levels of zinc dust, and sources of phosphorus, such as Cu₃P are blended into the contact mass. Volatile phosphorus compounds, such as PCl₃, and (CH₃)₃P, are injected upstream with methyl chloride flow into the contact mass.

The following Table shows the results obtained, where "D" is dimethyldichlorosilane:

| Cu Source | Cu/Zn Ratio | P(ppm as (CH₃)₃P) | % D at 20% Si Utilization |
|---|---|---|---|
| CuCl | 10:1 | 0 | 89.7 |
| " | " | 500 | 88.4 |
| | 100:1 | 0 | 85.6 |
| | | 500 | 94.2 |

Consistent with the results of Figure 3, a significant dimethyldichlorosilane promotional effect is shown as a result of the use of 500 ppm of phosphorus at Cu/Zn ratios of 100/1. For example, at 0% phosphorus an 85.6% D level is provided, while at 500 ppm of phosphorus, a 94.2% D level is shown. Similar results are obtained using (CH₃)₃P, (C₂H₅)₃P, or PCl₃ as phosphorus sources. For example, at 500 ppm, (CH₃)₃P provides a 91.3% yield at 10/1 Cu/Zn weight ratio, and a 93.2% yield at 100/1 Cu/Zn weight ratio.

### EXAMPLE 2.

The fixed bed reaction procedure of example 1 is substantially repeated, except in place of contact mass, the source of copper is copper flake and powdered brass obtained from OMG Americas, Research Triangle Park, North Carolina. The brass comprises by weight, 80% copper, 19.5% zinc and 0.5% tin.

The fixed bed reactions are conducted at 5% by weight copper levels, based on bed weight, comprising blends of powdered silicon, copper flake and appropriate amounts of brass. Master batch slurries in hexane or toluene of silicon, copper flake, and brass are made. A Cu/Zn weight ratio of about 11:1 is made using 135 g of silicon, 4.29 g of copper flake, and 3 g of brass. Another slurry is prepared to provide a Cu/Zn weight ratio of 35:1. The solvent is separated under reduced pressure, prior to charging the resulting blend into the fixed bed reactor.

The following results are obtained, employing (CH₃)₃P at 0 and 500 ppm, and at Cu/Zn weight ratios of 11:1 and 35:1,

| Cu Source | Cu/Zn Ratio | P(ppm as (CH₃)₃P) | % D at 20% Si Utilization |
|---|---|---|---|
| Cu flake | 11:1 | 0 | 88.3 |
| " | " | 500 | 90.8 |
| " | 35:1 | 0 | 83.3 |
| " | " | 500 | 91 |

### EXAMPLE 3.

A fluid bed reactor, similar to figure 2, is used in a direct method study. There is employed a copper/zinc catalyst to determine whether the effectiveness of phosphorus as a dimethyldichlorosilane promoter is influenced by the particular Cu/Zn weight ratio range used during the reaction. The fluid bed reactor consists of a 3.8 cm ID glass tube with a glass frit at the center to support the silicon bed. The reactor is enclosed in a glass heating tube which is wrapped in Nichrome wire. In order to fluidize the bed, a stirrer is used in combination with a vibrator not shown.

The reactor is initially charged with 20 g of contact mass having 5% copper and a starting Cu/Zn weight ratio of 10:1. Methyl chloride is fed into the reactor over a 24 to 28 hr period at a bed temperature of 300-310°C. After 35% silicon utilization, the crude is analyzed for % dimethyldichlorosilane by gas chromatography. The same procedure is repeated, except that the bed includes 10 mg of Cu₃P, which provides 500 ppm of phosphorus.

A similar fluid bed procedure is repeated with and without 10 mg of Cu₃P, except a Cu/Zn weight ratio of 100:1 is used. The Cu/Zn weight ratios of 10:1 and 100:1 are respectively repeated several times. The following are the results obtained from the fluid bed reactor using 10:1 and 100:1 Cu/Zn weight ratios:

### Fluid Bed Reactor

| Cu/Zn ratio | Phosphorus(ppm) | % D |
|---|---|---|
| 10/1 | 0 | 87 |
| " | 500 | 90 |
| 100/1 | 0 | 83.2 |
| " | 500 | 92.9 |

The above results are average values obtained from several repeat runs which are made to determine whether a statistically significant change occurs with respect to % D in methylchlorosilane crude, based on employing phosphorus at different Cu/Zn ratios. No significant statistical increase is found when comparing the 87% D yield (standard deviation=2) using a Cu/Zn ratio of 10:1 without phosphorus, to the 90% D yield (standard deviation=3.7) with phosphorus. However, at a Cu/Zn ratio of 100/1, a statistically significant increase occurs when the value 83.2% (standard deviation=2.3) is obtained without phosphorus, as compared to the 92.9% (standard deviation=2.9) obtained with phosphorus.

Although the above examples show only a few of the very many variations of conditions and materials which can be used in illustrating the practice of the present invention, it should be understood that the present invention is directed to a much broader scope as set forth in the description preceding these examples and the appended claims.

## Claims

1. A method for promoting the formation of dialkyldihalosilane during direct method alkylhalosilane production, comprising effecting reaction between alkylhalide and powdered silicon in the presence of a direct method catalyst comprising copper, silicon, zinc, and phosphorus, where there is maintained during alkylhalosilane formation, a reaction mixture comprising by weight, an average of from 1% to 5% of copper based on the weight of silicon, a sufficient amount of zinc to provide a Cu/Zn weight ratio having a value of from 25 to 100, and a proportion of from 100 ppm to 1000 ppm of phosphorus, based on the weight of reaction mixture.

2. A method in accordance with claim 1, where the direct method catalyst comprises copper, silicon, zinc, tin and phosphorus.

3. A method in accordance with claim 1, where the reaction is conducted in a continuous manner.

4. A method in accordance with claim 1, where the reaction is conducted in a fluid bed reactor, in a fixed bed reactor or in a stirred bed reactor.

5. A method in accordance with claim 1, where the Cu/Zn weight ratio has a value of 30 to 100.

6. A method in accordance with claim 1, where the proportion of phosphorus is 100 ppm to 1000 ppm.

7. A method in accordance with claim 1, where the dialkyldihalosilane is dimethyldichlorosilane.

8. A method in accordance with claim 1, where phosphorus is introduced into the reactor as copper phosphide, as an alkylphosphine or as phosphorus trichloride.

9. A method in accordance with claim 8, where phosphorus is introduced into the reactor as triethylphosphine or trimethylphosphine.

10. A method for promoting the formation of dimethyldichlorosilane in a continuous manner during direct method methylchlorosilane production, comprising effecting reaction in a fluid bed reactor between methyl chloride and powdered silicon in the presence of a catalyst comprising copper, silicon, zinc, tin, and phosphorus, where there is maintained during methylchlorosilane formation, a reaction mixture having an average proportion of from 1 % to 5 % of copper based on the weight of silicon, a sufficient amount of zinc to provide a Cu/Zn ratio having a value of from 30 to 100, and a proportion of 100 ppm to 1000 ppm of phosphorus, based on the weight of reaction mixture.

## Patentansprüche

1. Verfahren zum Fördern der Bildung von Dialkyldihalogensilan während der Alkylhalogensilan-Produktion nach dem Direktverfahren, umfassend die Umsetzung zwischen Alkylhalogenid und pulverisiertem Silicium in Gegenwart eines Katalysators für das Direktverfahren, umfassend Kupfer, Silicium, Zink und Phosphor, wobei während der Alkylhalogensilan-Bildung eine Reaktionsmischung aufrechterhalten wird, die, bezogen auf das Gewicht, im Mittel von 1 bis 5%, bezogen auf das Gewicht von Silicium, eine genügende Menge Zink zur Schaffung eines Cu/Zn-Gewichtsverhältnisses mit einem Wert von 25 bis 100, und einen Anteil von 100 ppm bis 1.000 ppm Phosphor, bezogen auf das Gewicht der Reaktionsmischung, umfasst.

2. Verfahren nach Anspruch 1, worin der Katalysator für das Direktverfahren Kupfer, Silicium, Zink, Zinn und Phosphor umfasst.

3. Verfahren nach Anspruch 1, worin die Umsetzung in einer kontinuierlichen Weise ausgeführt wird.

4. Verfahren nach Anspruch 1, worin die Umsetzung in einem Fließbett-Reaktor, in einem Festbett-Reaktor oder in einem Rührbett-Reaktor ausgeführt wird.

5. Verfahren nach Anspruch 1, worin das Cu/Zn-Gewichtsverhältnis einen Wert von 30 bis 100 hat.

6. Verfahren nach Anspruch 1, worin der Anteil des Phosphors 100 ppm bis 1.000 ppm beträgt.

7. Verfahren nach Anspruch 1, worin das Dialkylhalogensilan Dimethyldichlorsilan ist.

8. Verfahren nach Anspruch 1, worin Phosphor in den Reaktor als Kupferphosphid, als ein Alkylphosphin oder als Phosphortrichlorid eingeführt wird.

9. Verfahren nach Anspruch 8, worin Phosphor in den Reaktor als Triethylphosphin oder Trimethylphosphin eingeführt wird.

10. Verfahren zum Fördern der Bildung von Dimethyldichlorsilan in einer kontinuierlichen Weise während der Methylchorsilan-Produktion nach dem Direktverfahren, umfassend das Bewirken einer Umsetzung zwischen Methylchlorid und gepulvertem Silicium in einem Fließbett-Reaktor in Gegenwart eines Katalysators, umfassend Kupfer, Silicium, Zink, Zinn und Phosphor, wobei während der Methylchlorsilan-Bildung eine Reaktionsmischung aufrechterhalten wird, die einen mittleren Anteil von 1% bis 5% Kupfer, bezogen auf das Gewicht von Silicium, eine genügende Menge von Zink zur Schaffung eines Cu/Zn-Verhältnisses mit einem Wert von 30 bis 100 und einen Anteil von 100 ppm bis 1.000 ppm Phosphor, bezogen auf das Gewicht der Reaktionsmischung, aufweist.

## Revendications

1. Procédé pour activer la formation de dialkyldihalogénosilane pendant la production d'alkylhalogénosilane par un procédé direct, comprenant le fait de faire réagir un halogénure d'alkyle avec du silicium pulvérisé en présence d'un catalyseur de procédé direct comprenant du cuivre, du silicium, du zinc, et du phosphore, dans lequel on maintient, pendant la formation d'alkylhalogénosilane, un mélange réactionnel comprenant, en poids, une moyenne de 1 % à 5 % de cuivre par rapport au poids de silicium, une quantité suffisante de zinc pour obtenir un rapport pondéral Cu/Zn ayant une valeur de 25 à 100, et une proportion de 100 ppm à 1000 ppm de phosphore, rapportée au poids du mélange réactionnel.

2. Procédé selon la revendication 1, dans lequel le catalyseur de procédé direct comprend du cuivre, du silicium, du zinc, de l'étain et du phosphore.

3. Procédé selon la revendication 1, dans lequel la réaction est mise en oeuvre de manière continue.

4. Procédé selon la revendication 1, dans lequel la réaction est mise en oeuvre dans un réacteur à lit fluidisé, dans un réacteur à lit fixe ou dans un réacteur à lit agité.

5. Procédé selon la revendication 1, dans lequel le rapport pondéral Cu/Zn a une valeur de 30 à 100.

6. Procédé conforme à la revendication 1, dans lequel la proportion de phosphore est de 100 ppm à 1000 ppm.

7. Procédé selon la revendication 1, dans lequel le dialkyldihalogénosilane est du diméthyldichlorosilane.

8. Procédé selon la revendication 1, dans lequel le phosphore est introduit dans le réacteur sous forme de phosphure de cuivre, d'une alkylphosphine ou de trichlorure de phosphore.

9. Procédé selon la revendication 8, dans lequel le phosphore est introduit dans le réacteur sous forme de triéthylphosphine ou de triméthylphosphine.

10. Procédé pour activer la formation de diméthyldichlorosilane de manière continue pendant la production de méthylchlorosilane par procédé direct, comprenant le fait de faire réagir, dans un réacteur à lit fluidisé, du chlorure de méthyle avec du silicium pulvérisé en présence d'un catalyseur comprenant du cuivre, du silicium, du zinc, de l'étain et du phosphore, dans lequel on maintient, pendant la formation de méthylchlorosilane, un mélange réactionnel ayant une proportion moyenne de 1 % à 5 % de cuivre par rapport au poids de silicium, une quantité suffisante de zinc pour obtenir un rapport Cu/Zn ayant une valeur de 30 à 200, et une proportion de 100 ppm à 1000 ppm de phosphore, rapportée au poids du mélange réactionnel.
